# EUROPÄISCHE PATENTANMELDUNG

(11) **EP 1 190 765 A2**
(43) Veröffentlichungstag der Anmeldung: **27.03.2002**
(21) Anmeldenummer: 01121906.0
(22) Anmeldetag: 12.09.2001
(51) Int. Cl.: B01J 19/24, B01J 19/00, C01B 3/02, H01M 8/02

(54) **Vorrichtung zur Verdampfung einer Flüssigkeit**

(30) Priorität: 21.09.2000 DE 10046692
(71) Anmelder: XCELLSIS GmbH, 73230 Kirchheim / Teck-Nabern (DE)
(72) Erfinder: Ebert, Andreas, 73230 Kirchheim (DE); Lamla, Oskar, 73230 Kirchheim-Nabern (DE); Schüssler, Martin, Dr., 89073 Ulm (DE); Stefanovski, Tomas, 71034 Böblingen (DE)
(74) Vertreter: Kocher, Klaus-Peter Dipl.-Phys

(57) **Zusammenfassung**

Die vorliegende Erfindung betrifft eine Vorrichtung mit mehreren Räumen (9,10,11,20) zur Durchführung einer festkörperkatalysierten Reaktion, mit einer gemeinsamen Verdampfungseinheit (2) zum Verdampfen flüssiger Edukte (1), wobei die Verdampfungseinheit (2) mit einer Mehrzahl von Räumen (9,10,11,20) in wärmeleitendem Kontakt steht, wobei ein Bereich der Verdampfungseinheit (2), in der die Verdampfung im wesentlichen stattfindet, von Räumen (9,10,11,20) zumindest teilweise umgeben ist.

## Beschreibung

Die Erfindung betrifft eine Vorrichtung zur Verdampfung einer Flüssigkeit gemäß dem Oberbegriff des Anspruchs 1.

Festkörperkatalysierte Verfahren und die dazu notwendigen Vorrichtungen finden in immer größerem Ausmaß Verwendung in der Technik.

Ein Beispiel dafür ist der Einsatz von Brennstoffzellen zur Energieversorgung von Wohnungen und Kraftfahrzeugen (Ullmann's Encyklopädie der technischen Chemie Band 12, S. 113-136, Verlag Chemie, Weinheim 1976), oder von galvanischen Zellen zur Verringerung von Kohlenmonoxidemissionen.

Wichtig in derartigen Anlagen ist eine einfache, kompakte, geringen Raumbedarf beanspruchende Bauweise bei gleichzeitig geringem Bedarf an oft teurem Katalysatormaterial und ein hoher Umsatz.

Beispielhaft sei dies anhand von Kohlenwasserstoff-Reformierungsreaktoren verdeutlicht:

So wurde zur Erzeugung von Wasserstoff aus Kohlenwasserstoffen, beispielsweise Methanol, und Wasser in der EP 0 906 890 A1 vorgeschlagen, die Reaktionsedukte durch aufeinandergestapelte, Katalysatormaterial enthaltende Schichten hindurchzupressen. Dadurch spielen die bei der Zu- und Ableitung von flüssigen Edukten und Produkten oft problematischen Strömungswiderstände keine Rolle.

In der DE 196 54 361 A1 ist ebenfalls ein Reaktor in Stapelbauweise beschrieben, bei dem die einzelnen aufeinandergestapelten Schichten über in Fluidverbindung stehende Reaktionskanäle verbunden sind. Die unveröffentlichte DE 199 04 398 offenbart einen Stapelreaktor aus fluchtend übereinander angeordneten, mit einem einzigen Durchbruch versehenen Scheiben, die Katalysatormaterial enthalten, bei dem die flüssigen Reaktionsedukte über den aus den Durchbrüchen gebildeten Reaktionskanal, der mit einer Dosierlanze versehen ist, auf die einzelnen Scheiben zudosiert werden können. Derartige Stapelreaktoren sind aufgrund ihrer modularen, kompakten Bauweise vielseitig einsetzbar.

Im allgemeinen verläuft die Kohlenwasserstoffreformierung in zwei oder mehr Stufen, wobei in einer ersten Stufe in einem ersten Reaktor nur ein Teilumsatz des Kohlenwasserstoffs angestrebt wird und in einem zweiten Reaktor das Edukte und Produkte enthaltende Reaktionsgemisch einem zweiten, restumsatzoptimierten Reaktor zugeleitet wird, wie es beispielhaft in der EP 0 687 648 A1 beschrieben ist. Aus der EP 0 217 532 B1 ist ein weiterer Reaktor bekannt, der aus zwei übereinanderliegenden Reaktionszonen besteht.

Jedoch besteht bei den bislang bekannten Reaktortypen das Problem, daß bei Verwendung eines oder mehrerer in flüssigem Zustand vorliegenden Reaktionsedukte der Reaktor nicht mit Nennleistung betrieben werden kann, da die Flüssigkeit durch herkömmliche Dosiermethoden, beispielsweise Düsen, nicht direkt auf die katalytische Schicht gebracht werden kann.

Des weiteren ergeben sich Probleme beim Start des Reaktors, da die Fläche, die mit der Flüssigkeit in Berührung kommt, nicht ausreichend ist, um die beispielsweise aufgesprühte Flüssigkeit zu verdampfen. Dies führt dazu, daß der Reaktor aufgrund einer plötzlich zu großen Flüssigkeitsmenge auch nach Start der katalytischen Reaktion nicht in Gang kommt und im Extremfall die katalytische Reaktion sogar zum vollständigen Erliegen kommt. Es ist daher bei vielen festkörperkatalysierten Reaktionen oft wünschenswert, ein Reaktionsedukt schon in weitgehend dampfförmigen Zustand einer Katalysatorschicht zuzuführen.

Aus der DE 199 07 665 A1 ist eine Vorrichtung mit einem Stapelreaktor bekannt, bei der ein Verdampfer durch Wärmetausch mit heißen Synthesegas beheizt wird. In einer vorgeschlagenen Ausführung stößt der Verdampfer stirnseitig an die Flachseite der äußersten Reaktorscheibe und wird durch das im Reaktor gebildete heiße Synthesegas im Gegenstrom erwärmt. Dazu wird das Synthesegas gesammelt, aus dem Reaktor abgeführt und an der Außenwand des Verdampfers vorbeigeleitet.

Ausgehend hiervon liegt der Erfindung die Aufgabe zugrunde, eine Vorrichtung zur Durchführung einer festkörperkatalysierten Reaktion zu schaffen, die die uniforme, kontinuierliche Verdampfung eines Eduktes in der Weise ermöglicht, daß eine nachfolgende gleichmäßige Verteilung eines Eduktes auf eine Vielzahl von Katalysatorschichten erreicht wird.

Zur Lösung dieser Aufgabe wird eine Vorrichtung zur Durchführung einer festkörperkatalysierten Reaktion mit den Merkmalen des Anspruchs 1 vorgeschlagen.

Mit der erfindungsgemäßen Vorrichtung wird gewährleistet, daß die Verdampfung eines Eduktes kontinuierlich und vollständig in der gesamten Verdampfungseinheit erfolgt, so daß anschließend durch ein geeignetes Verteilsystem Eduktdampf homogen und gleichmäßig in Reaktionsräume mit Katalysatorschichten geleitet und durch oder auf die Katalysatorschichten zugeführt werden kann. Außerdem wird durch den Einsatz von verdampftem Edukt die Reaktionsgeschwindigkeit der betreffenden Reaktion an der Katalysatorschicht bedeutend erhöht.

Der Begriff Katalysatorschicht bedeutet im folgenden eine Schicht beliebiger geometrischer Form, Struktur und Zusammensetzung, die Material umfaßt, das bei einer vorher gewählten Reaktion, die an der Oberfläche oder innerhalb dieser Schicht stattfindet, die Aktivierungsenergie dieser Reaktion herabsetzt. Dieses Material kann auch mit dem Begriff "Katalysator" umschrieben werden.

Unter "Verdampfungseinheit" wird im nachfolgenden jede geeignete Vorrichtung verstanden, an der oder in der durch Wärmezufuhr ein sich im flüssigen Zustand befindlicher Stoff in die Dampfphase überführt werden kann.

Die Verdampfungseinheit bezieht die notwendige Wärme zur Eduktverdampfung aus der exothermen katalytischen Reaktion, die an den Katalysatorschichten abläuft. Die katalysatorschichthaltigen Räume können auch als Module bezeichnet werden. Mittels an sich bekannter Verfahren wird die Reaktion in Gang gebracht, deren Wärme dann über die wärmeleitende Verbindung den Verdampfer speist. Dabei erfolgt der Wärmeeintrag im wesentlichen direkt durch Kontakt mit der heißen Reaktorzone. Die Verdampfungseinheit befindet sich im Bereich der heißen Reaktorzone, und die Verdampfung findet daher in diesem Bereich statt.

Die wärmeleitende Verbindung erfolgt derart, daß die sich ergebende Temperaturverteilung in der Verdampfungseinheit ideal für den Betrieb der Vorrichtung ist, beispielsweise für einen modular aufgebauten Stapelreaktor. So sollte im Falle eines modularen Reaktors vorzugsweise sichergestellt sein, daß die Temperatur in allen Modulen die gleiche ist.

Es kann jedoch auch ein Temperaturgradient zwischen den Modulen eingestellt werden. Soll aus einem Modul mehr Wärme ausgekoppelt werden, kann dort die thermische Kopplung mit dem Verdampfer stärker ausgebildet werden als zu anderen Modulen, bei denen etwa eine geringere Wärmemenge ausgekoppelt werden soll.

Weiterhin ist es möglich, nur ein Edukt vorab zu verdampfen und ein anderes über andere Mittel direkt auf die Katalysatorschicht getrennt oder gemeinsam mit dem ersten verdampften Edukt zuzuführen. In der Regel wird jedoch das gesamte Reaktionsgemisch vorab verdampft. Im einzelnen wird dies jedoch von der durchzuführenden Reaktion abhängen.

In bevorzugter Ausgestaltung besteht die Verdampfungseinheit aus mehreren zueinander parallel angeordneten Kanälen, da es günstig ist, mehrere kleiner dimensionierte Kanäle der Verdampfungseinheit mit Wärme zu versorgen, als eine große zentrale Verdampfungseinheit. Zum einen wird dabei die Oberfläche der Verdampfungseinheit erhöht, was zu einem verbesserten Wärmetransfer zwischen Katalysatorschicht und Verdampfungseinheit führt. Zum anderen ist durch die Verzweigung auch leicht ein mehrfacher Kontakt mit den Katalysatorschichten ermöglicht, beispielsweise durch eine Anordnung, bei der eine oder mehrere Bohrungen auf jede Katalysatorschicht geführt werden, in denen dann die Verdampfungseinheit angeordnet ist. Auch dies ist jedoch abhängig vom Reaktordesign und der durchzuführenden Reaktion.

Der bevorzugte Reaktor kann schnell und effizient gestartet und in allerkürzester Zeit sofort mit Nennleistung betrieben werden.

Die räumliche Anordnung der Verdampfungseinheit an den Modulen eines Reaktors ist beliebig, es sind beispielsweise Anordnungen am äußeren Rande der Module bzw. der gesamten Vorrichtung denkbar.

Bevorzugt steht die Verdampfungseinheit mit den Räumen und/oder der Katalysatorschicht in starrer Verbindung, da dies eine wärmeleitende Verbindung zu der heißen Reaktorzone ohne größere Wärmeverluste ermöglicht.

Je nach Reaktion und der dabei freiwerdenden Wärme kann es auch vorteilhaft sein, die Verbindung beweglich auszugestalten, so daß extreme Spannungen, hervorgerufen durch Thermogradienten zwischen Katalysatorschicht und Verdampfungseinheit, die diese irreversibel schädigen könnten, vermieden werden.

Die erfindungsgemäße Vorrichtung eignet sich für alle bekannten festkörperkatalysierten Verfahren, insbesondere jedoch zur Reformierung von Kohlenwasserstoffen, wobei unter Kohlenwasserstoffen auch Verbindungen, wie Alkohole, Aldehyde, Ketone, Ether usw. verstanden werden. Dies kann zur Herstellung von Wasserstoff für Brennstoffzellen verwendet werden.

Damit wird eine effiziente und einfach zu konstruierende Verfahrensführung erreicht, so daß das kontinuierlich und vollständig verdampfte Edukt über geeignete Verteilsysteme den Katalysatorschichten zugeführt werden kann. Die gleichmäßige Verdampfung ermöglicht eine kontinuierliche und kontrollierbare Zufuhr von verdampftem Edukt mit einer gleichmäßigen Verteilung auf sämtliche Module eines Reaktors, der so schneller betriebsbereit ist.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Fig. 1: zeigt einen Querschnitt durch eine bevorzugte Ausführung einer erfindungsgemäßen Vorrichtung,
- Fig. 2: zeigt einen Querschnitt durch eine weitere bevorzugte Ausführung der erfindungsgemäßen Vorrichtung.

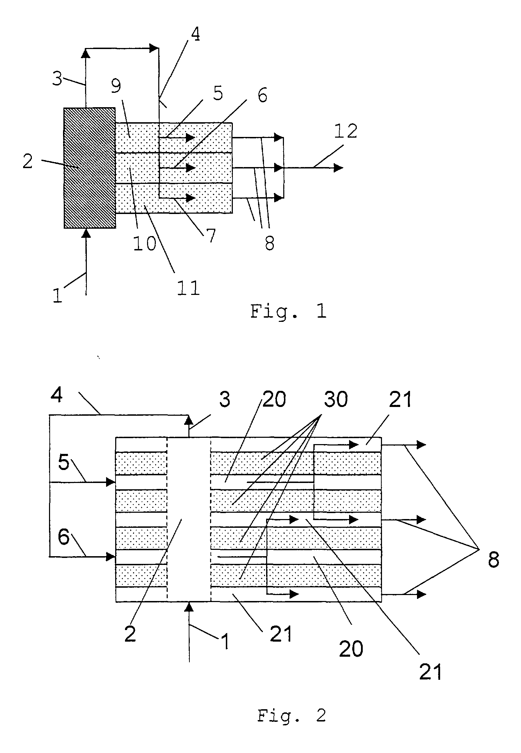

Anhand Fig. 1 ist das Grundprinzip einer erfindungsgemäßen Vorrichtung anschaulich dargestellt. Gemäß der Erfindung ist eine Verdampfungseinheit mit nachfolgender Verteilereinheit thermisch an eine heiße Reaktionszone angekoppelt, in die das verdampfte Edukt aus der Verdampfungseinheit zudosiert wird. Der Bereich der Verdampfungseinheit, in dem die Verdampfung stattfindet, befindet sich in enger Nachbarschaft zum Bereich der heißen Reaktorzone, wobei sie vorzugsweise in diese hineinragt.

Die Vorrichtung besteht dabei aus mehreren übereinander angeordneten Räumen 9, 10, 11, welche vorzugsweise Katalysatormaterial enthalten. Dieses kann als Beschichtung der Raumwände und/oder als katalysatorhaltiger Körper und/oder als Schüttung in den jeweiligen Räumen 9, 10, 11 und/oder als Begrenzung zwischen den Räumen 9, 10, 11 vorgesehen sein. An die Räume 9, 10, 11 grenzt eine Verdampfungseinheit 2 an, in der ein flüssiges Edukt 1 verdampft wird und das als Eduktdampf 3 über Austrittsmittel 5, 6, 7 eines Verteilersystems 4 den Räumen 9, 10, 11 zugeführt wird. Dabei steht die Verdampfungseinheit 2 im wesentlichen direkt mit der heißen Reaktorzone, vorzugsweise direkt mit heißen Katalysatorschichten der Räume 9, 10, 11 in Kontakt, d.h. der Bereich der Verdampfungseinheit 2, in der die Verdampfung im wesentlichen stattfindet, ist von den Räumen 9, 10, 11, und damit von der heißen Reaktorzone, zumindest teilweise umgeben. Die Verdampfungseinheit 2 kann so angeordnet sein, daß sie ganz von den Räumen umgeben ist, oder sie kann am Randbereich angeordnet sein, daß sie zumindest teilweise von den Räumen 9, 10, 11 umgeben ist, z.B. daß sie seitlich an diese angrenzt, wie in der Fig. 1 dargestellt ist. Dabei befindet sich der Bereich der Verdampfung jeweils auf der Höhe der heißen Reaktorzone der Räume 9, 10, 11 in etwa parallel dazu angeordnet.

Der Wärmeeintrag findet direkt in diesem Bereich statt, indem Wärme von den Räumen 9, 10, 11 in die Verdampfungseinheit 2 direkt eingekoppelt wird, etwa über Festkörperwärmeleitung vom heißen Katalysatormaterial zur benachbarten Verdampfungseinheit 2. Ein separater Wärmeträger, etwa wie im Stand der Technik ein heißes Synthesegas, ist zum Einkoppeln der Wärme in die Verdampfungseinheit 2 nicht notwendig.

In der erfindungsgemäßen Anordnung durchläuft das zugeführte Edukt 1 erst vollständig die Verdampfungseinheit 2 und legt damit auch zuerst einmal einen Weg senkrecht zu den Räumen 9, 10, 11 zurück. Auf dem Weg durch die Verdampfungseinheit 2 durchläuft das Edukt 1 auch die heiße Zone des Reaktors, die durch die aufeinandergestapelten Räume 9, 10, 11 gebildet wird. Auf diesem Weg wird das Edukt vollständig in die Dampfphase überführt. Am Ende der Verdampfungseinheit 2 liegt das Edukt 3 dann als Dampf vor, tritt in das Verteilersystem 4 ein und wird mit diesem in die Räume 9, 10, 11 zurückgeführt. Das Edukt 1 durchläuft also den Reaktor, bzw. die Stapelanordnung des Reaktors praktisch zweimal, nämlich senkrecht zu der Stapelrichtung des Reaktors erst in der einen Richtung - in der Verdampfungseinheit 2 - und dann dampfförmig in der Gegenrichtung im Verteilsystem 4.

Dabei ist vorzugsweise jeweils ein Auslaß 5, 6, 7 zur möglichst gleichmäßigen Verteilung des Eduktdampfes 3 jeweils einem katalysatorhaltigen Raum 9, 10, 11 zugeordnet. In einer bevorzugten Ausführung ragt jeweils ein Auslaß 5, 6, 7 in den zugeordneten Raum 9, 10, 11 hinein. Das dampfförmige Edukt 3 wird in die entsprechenden Räume 9, 10, 11 eingelassen und in den Räumen 9, 10, 11 umgesetzt. Dabei entsteht Wärme, die wiederum zur Verdampfung des flüssigen Edukts 1 in der Verdampfungseinheit 2 zur Verfügung gestellt wird. Die erfindungsgemäße Vorrichtung weist weiter an sich bekannte Mittel 8, 12 zum Abführen der Produkte auf, wobei die umgesetzten Produkte des Edukts 3 aus Abführmitteln 8 in einen Sammelkanal 12 geleitet werden.

Die Verdampfungseinheit 2 ist in wärmeleitendem Kontakt mit vorzugsweise allen Räumen 9, 10, 11 verbunden. Vorzugsweise besteht ein enger, materialschlüssiger Kontakt zwischen Verdampfungseinheit 2 und der heißen Zone des Reaktors. Der Kontakt besteht im wesentlichen mit den Räumen 9, 10, 11, etwa den Wänden und/oder den Katalysatorschichten der Räume 9, 10, 11. Dabei kann die Verbindung selbst fest sein, so daß im wesentlichen ein festkörperwärmeleitender Kontakt besteht, oder lose, so daß nur punktuell Wärme über Festkörperwärmeleitung eingetragen werden kann, aber eine Einkopplung auch durch Konvektion und/oder Wärmestrahlung erfolgen kann.

Vorzugsweise erstreckt sich die Verdampfungseinheit 2 senkrecht zu den Räumen 9, 10, 11, bzw. zu deren Stapelrichtung und ist seitlich neben den Räumen 9, 10, 11 angeordnet. Die Verdampfung findet in derselben Reaktorzone, d.h. benachbart zur heißen Zone der Räume 9, 10, 11, statt, in der auch die Wärme zur Verdampfung entsteht. Unter "innerhalb der Räume" wird sinngemäß auch verstanden, wenn die Verdampfungseinheit 2 seitlich, parallel zur Stapelrichtung der Räume 9, 10, 11 an diese angrenzt. Dies ermöglicht eine sehr kompakte Bauweise, da keine außerhalb des Reaktors befindliche separate Verdampfereinrichtung vorgesehen werden muß und die Wärmeeinkopplung im wesentlichen im Zentrum der Wärmeentwicklung in den Räumen 9, 10, 11 erfolgt und daher nur geringe Wärmeverluste entstehen.

Bevorzugt ist die thermische Ankopplung der Verdampfungseinheit 2 an die Räume 9, 10, 11 so gestaltet, daß in allen Räumen 9, 10, 11 im wesentlichen dieselbe Temperatur herrscht, d.h. daß im wesentlichen aus jedem Raum dieselbe Wärmemenge in die Verdampfungseinheit 2 abgeführt wird. Günstig ist, die Ankopplung so zu gestalten, daß die Ankopplung abhängig von einem Temperaturgradienten in der Verdampfungseinheit 2 variiert. Ist z.B. ein Bereich in der Verdampfungseinheit 2 kalt und würde daher viel Wärme aus dem benachbarten Raum abziehen, so wird die Ankopplung an den angrenzenden Raum 9, 10, oder 11 vorzugsweise schwächer ausgebildet als bei einem Bereich der Verdampfungseinheit 2, der eine hohe Temperatur hat, daher weniger Wärme aus dem angrenzenden Raum 9, 10 oder 11 benötigt und besser angekoppelt sein kann. Die thermische Ankopplung ist vorzugsweise umgekehrt proportional zum Temperaturgradienten in der Verdampfungseinheit 2 variabel ausgebildet. Dadurch wird erreicht, daß die Temperatur der Räume 9, 10, 11 möglichst gleichmäßig ist und die Vorrichtung insgesamt unter homogenen Bedingungen arbeiten kann.

Es kann jedoch durch Variation der thermischen Kopplung zwischen Räumen 9, 10, 11 und Verdampfungseinheit 2 auch ein gezielter Temperaturgradient zwischen den Räumen 9, 10, 11 eingestellt werden.

Bevorzugt ist eine Stapelanordnung von Räumen 9, 10, 11, bei denen die einzelnen Räume 9, 10, 11 im wesentlichen gleichartig sind. Ein bevorzugter Stapelreaktor umfaßt dabei beabstandet oder nicht beabstandet aufeinanderfolgend angeordnete katalysatorhaltige Räume 9, 10, 11, an welche die Verdampfungseinheit 2 thermisch angekoppelt ist. Die Verdampfungseinheit 2 kann dabei als durchgehendes Rohr aus einem metallischen Material ausgebildet sein, durch welches das zu verdampfende Edukt 1 geführt wird. Das Rohr kann dabei entweder fest mit dem Räumen 9, 10, 11 verbunden sein, oder aber nur lose hindurchgeführt sein, um die oben geschilderten Vorteile einer beweglichen Anordnung zu gewährleisten. Sowohl die feste als auch die lose Verbindung der Verdampfungseinheit 2 ermöglichen einen direkten Kontakt zu den Katalysatorschichten bzw. den Räumen 9, 10, 11 gemäß der Erfindung.

Da das Edukt 3 in den Austrittsmitteln 5, 6, 7 dampfförmig vorliegt, können die Austrittsmittel 5, 6, 7 auch thermisch mit den Räumen 9, 10, 11 und/oder dem Katalysatormaterial in den Räumen gekoppelt sein, ohne daß ein störender Einfluß auf die Gleichverteilung der Edukte in den Räumen 9, 10, 11 zu befürchten ist. Da das Edukt 3 vollständig in der Verdampfungseinheit 2 verdampft, können keine Pulsationen des flüssigen Edukts 1 in den Austrittsmitteln 5, 6, 7 auftreten und die Gleichverteilung stören.

In Fig. 2 ist eine weitere bevorzugte Ausführung der Erfindung dargestellt. Mehrere Räume 20 sind übereinander angeordnet und durch katalysatorhaltiges Material beabstandet, vorzugsweise durch gesinterte Katalysatorscheiben 30. Im Innern der Stapelanordnung von Räumen 20, 21 und Katalysatorscheiben 30 ist ein Kanal vorgesehen, der senkrecht zu der Stapelanordnung verläuft und eine Verdampfungseinheit 2 beinhaltet. Die Verdampfungseinheit 2 ist vorzugsweise in innigem thermischen Kontakt mit den Räumen 20 und/oder den Katalysatorscheiben 30. Die Verdampfungseinheit 2 ist von den Räumen 20, 21 umgeben. Flüssiges Edukt 1 wird in die Verdampfungseinheit 2 zugeführt und wie oben beschrieben vollständig verdampft, während es durch die Verdampfungseinheit 2 läuft. Zweckmäßigerweise sind die porösen Katalysatorscheiben zur Verdampfungseinheit 2 so abgedichtet, daß diese kein flüssiges Edukt 1 aus der Verdampfungseinheit 2 aufsaugen können.

Nachdem das nunmehr dampfförmige Edukt 3 den Bereich der Verdampfungseinheit 2 durchlaufen hat, in dem die Verdampfung stattfindet, wird es über ein Verteilersystem 4 .zu Austrittsmitteln 5, 6 geführt und tritt dort in die Räume 20 ein. Das dampfförmige Edukt 3 tritt durch die Katalysatorscheiben 30, wird dort umgesetzt und gelangt dann in die benachbarten Sammelkanäle 21 und wird über Mittel 8 zum Abführen der Produkte abgeführt. Auch hier strömt das Edukt erst in einer Richtung entlang der Stapelrichtung und wird dann umgelenkt und in dem Verteilersystem 4 zurück in Gegenrichtung geführt und im Reaktor verteilt.

Vorteilhaft ist, daß mittels der erfindungsgemäßen Vorrichtung alle im wesentlichen gleichartigen Räume sehr gleichförmig arbeiten können, da das Edukt weitgehend gleichverteilt in die Räume 20 und zum Katalysatormaterial 30 gelangen kann.

Die Erfindung ist besonders für Reaktoren geeignet, in denen ein Brennmittel wie Kohlenwasserstoffe, Ether und/oder Alkohole, vorzugsweise Methanol, für eine Brennstoffzelle zur Wasserstoffgewinnung einer Reformierungsreaktion unterzogen werden soll. Ein bevorzugter Reaktor ist ein autothermer Reformierungsreaktor, der gemäß den Ausführungsbeispielen in Fig. 1 oder Fig. 2 aufgebaut werden kann. Mittels einer katalytischen Reaktion, bevorzugt mit einem kupferhaltigen Katalysator, wird Wasserstoff aus dem Brennmittel gewonnen. Die notwendige Temperatur kann durch Sauerstoffzugabe in den Reformierungsreaktor erzielt werden, wobei ein Teil des verdampften Brennmittels oxidiert wird.

## Patentansprüche

1. Vorrichtung mit mehreren Räumen (9, 10, 11, 20) zur Durchführung einer festkörperkatalysierten Reaktion, mit einer gemeinsamen Verdampfungseinheit (2) zum Verdampfen flüssiger Edukte (1), wobei die Verdampfungseinheit (2) mit einer Mehrzahl von Räumen (9, 10, 11, 20) in wärmeleitendem Kontakt steht,
**dadurch gekennzeichnet,**
**daß** ein Bereich der Verdampfungseinheit (2), in der die Verdampfung im wesentlichen stattfindet, von Räumen (9, 10, 11, 20) zumindest teilweise umgeben ist.

2. Vorrichtung nach Anspruch 1,
**dadurch gekennzeichnet,**
**daß** die Verdampfungseinheit (2) ganz von den Räumen (9, 10, 11, 20) umgeben ist.

3. Vorrichtung nach Anspruch 1,
**dadurch gekennzeichnet,**
**daß** die Verdampfungseinheit (2) in einem Randbereich der Räume (9, 10, 11, 20) so angeordnet ist, daß sie an die Räume angrenzt.

4. Vorrichtung nach Anspruch 1,
**dadurch gekennzeichnet,**
**daß** die Verdampfungseinheit (2) mit Katalysatorschichten der Räume (9, 10, 11, 20) im wesentlichen direkt in Kontakt ist.

5. Vorrichtung nach Anspruch 1,
**dadurch gekennzeichnet,**
**daß** die Verdampfungseinheit (2) mit den Räumen (9, 10, 11, 20) in starrer Verbindung steht.

6. Vorrichtung nach Anspruch 1,
**dadurch gekennzeichnet,**
**daß** die Verdampfungseinheit (2) mit den katalysatorhaltigen Räumen (9, 10, 11, 20) in beweglicher Verbindung steht.

7. Vorrichtung nach Anspruch 1,
**dadurch gekennzeichnet,**
**daß** die Verdampfungseinheit (2) thermisch so an die Räume (9, 10, 11, 20) angekoppelt ist, daß die thermische Ankopplung mit einem Temperaturgradienten in der Verdampfungseinheit variiert.

8. Vorrichtung nach Anspruch 7,
**dadurch gekennzeichnet,**
**daß** die thermische Ankopplung umgekehrt proportional zum Temperaturgradienten variabel ausgebildet ist.

9. Vorrichtung nach Anspruch 1,
**dadurch gekennzeichnet,**
**daß** die Verdampfungseinheit (2) aus mehreren parallelen Kanälen gebildet ist.

10. Vorrichtung nach Anspruch 1,
**dadurch gekennzeichnet,**
**daß** das Edukt (1, 3) ein Kohlenwasserstoff, ein Ether und/oder ein Alkohol ist.

11. Verwendung der Vorrichtung nach Anspruch 1 zur autothermen Reformierung von Methanol.

12. Verwendung der Vorrichtung nach Anspruch 1 in einem Brennstoffzellensystem.
